# EUROPÄISCHE PATENTSCHRIFT

(11) **EP 4 487 411 B1**
(45) Veröffentlichungstag und Bekanntmachung des Hinweises auf die Patenterteilung: **11.11.2026**
(21) Anmeldenummer: 23700205.0
(22) Anmeldetag: 11.01.2023
(51) Int. Cl.: H01P 1/04, H01P 5/107, H01Q 1/22, H01Q 1/32, H01Q 13/02, H01Q 21/00

(54) **RADARVORRICHTUNG UND VERFAHREN ZUM HERSTELLEN EINER RADARVORRICHTUNG**
RADAR DEVICE AND METHOD FOR PRODUCING A RADAR DEVICE
DISPOSITIF RADAR ET SON PROCÉDÉ DE PRODUCTION

(30) Priorität: 02.03.2022 DE 102022202140
(43) Veröffentlichungstag der Anmeldung: 08.01.2025
(73) Patentinhaber: Robert Bosch GmbH, 70442 Stuttgart (DE)
(72) Erfinder: HIMMELSTOSS, Armin, 71554 Weissach Im Tal (DE); KUGLER, Andreas, 73553 Alfdorf (DE); GREVENT, Corinne, 73760 Ostfildern (DE)
(86) Internationale Anmeldenummer: PCT/EP2023/050505
(87) Internationale Veröffentlichungsnummer: WO 2023/165750

(56) Entgegenhaltungen:
- DE-A1- 102020 209 307

## Beschreibung

Die vorliegende Erfindung betrifft eine Radarvorrichtung und ein Verfahren zum Herstellen einer Radarvorrichtung. Insbesondere betrifft die Erfindung eine Radarvorrichtung zur Verwendung in einem Kraftfahrzeug.

### Stand der Technik

Fahrerassistenzsysteme unterstützen den Fahrer oder können das Fahrzeug zumindest teilweise selbstständig steuern. Für die bereitgestellten Funktionen ist eine gute Kenntnis der Umgebung des Fahrzeugs Grundvoraussetzung. Fahrerassistenzsysteme greifen daher auf Sensordaten zu, welche von Sensoren des Fahrzeugs generiert worden sind. Typische Sensoren umfassen dabei Fahrzeugkameras, Lidarsensoren, Infrarotsensoren und insbesondere Radarsensoren.

Die Radarsensorik muss dabei eine hohe Empfindlichkeit und ein gutes Trennvermögen aufweisen. Dies stellt hohe Anforderungen an das Antennenfeld des Radarsensors. Gleichzeitig sollen die Kosten geringgehalten werden. Kostenreduktion kann dabei durch Integration erfolgen, z.B. durch die Integration von elektrischer Signalerzeugung, - übertragung, -empfang und -verarbeitung in ein einziges System on Chip (SoC).

Neben konventionellen Patch-Antennen-Arrays können dabei Wellenleiter (WaveGuide)-Antennen zum Einsatz kommen. Während Patch-Antennen-Arrays typischerweise schmalbandiger sind, können Wellenleiterantennen Bandbreiten von bis zu etwa 10 GHz abdecken. Darüber hinaus versprechen Wellenleiterantennen im Vergleich zu heutigen Patch-Antennen einen besseren Wirkungsgrad, geringere Verluste und ein größeres Sichtfeld. Ein beispielhaftes Wellenleiter-Interface ist aus der US 2020/0365971 A1 bekannt. Aus der DE 10 2020 209307 A1 ist ein Radarsensor mit Hohlleiterstruktur bekannt.

### Offenbarung der Erfindung

Die Erfindung stellt eine Radarvorrichtung und ein Verfahren zum Herstellen einer Radarvorrichtung mit den Merkmalen der unabhängigen Patentansprüche bereit.

Bevorzugte Ausführungsformen sind Gegenstand der jeweiligen Unteransprüche.

Gemäß einem ersten Aspekt stellt die Erfindung demnach eine Radarvorrichtung bereit, mit einer Leiterplatte und einem Signalerzeugungsschaltkreis, welcher zumindest mittelbar auf der Leiterplatte angeordnet ist, mit der Leiterplatte elektrisch gekoppelt ist und dazu ausgebildet ist, ein Radarsignal zu generieren. Weiter umfasst die Radarvorrichtung eine Wellenleiterantenneneinrichtung, welche zumindest mittelbar auf der Leiterplatte angeordnet ist und zumindest teilweise auf Spritzgusskunststoffbasis ausgebildet ist. Weiter umfasst die Radarvorrichtung eine Wellenleiterkoppeleinrichtung, wobei der Signalerzeugungsschaltkreis auf oder in der Wellenleiterkoppeleinrichtung angeordnet ist, wobei die Wellenleiterkoppeleinrichtung dazu ausgebildet ist, das von dem Signalerzeugungsschaltkreis generierte Radarsignal in die Wellenleiterantenneneinrichtung einzukoppeln.

Gemäß einem zweiten Aspekt stellt die Erfindung ein Verfahren zum Herstellen einer Radarvorrichtung bereit. Das Verfahren umfasst das Bereitstellen einer Leiterplatte, wobei ein Signalerzeugungsschaltkreis zumindest mittelbar auf der Leiterplatte angeordnet ist, wobei der Signalerzeugungsschaltkreis mit der Leiterplatte elektrisch gekoppelt ist und dazu ausgebildet ist, ein Radarsignal zu generieren. Das Verfahren umfasst weiter das zumindest teilweise Umspritzen der Leiterplatte mit dem Signalerzeugungsschaltkreis mit Kunststoff in einer mit Wellenleiterkanälen strukturierten Spritzgussform. Das Verfahren umfasst weiter das Entfernen der Spritzgussform und das Metallisieren der Wellenleiterkanäle zum Ausbilden einer Wellenleiterantenneneinrichtung. Das Verfahren umfasst weiter das Freistellen von Einkoppelelementen einer Wellenleiterkoppeleinrichtung, wobei die Wellenleiterkoppeleinrichtung dazu ausgebildet ist, das von dem Signalerzeugungsschaltkreis generierte Radarsignal über die Einkoppelelemente in die Wellenleiterantenneneinrichtung einzukoppeln.

### Vorteile der Erfindung

Die Erfindung stellt eine Radarvorrichtung mit einer Leiterplatte, einem Signalerzeugungsschaltkreis und einer Wellenleiterkoppeleinrichtung bereit, welche zu einem Hochfrequenz-Package kombiniert sein können, auf welches mittels Kunststoff-Spritzgussverfahren eine Wellenleiterantenneneinrichtung aufgespritzt wird. Dadurch kann auf Hochfrequenz-Laminate auf der Leiterplatte für die Radarvorrichtungen verzichtet werden. Es ist möglich, Adapterbauteile in kostengünstiger Leiterplattentechnik herzustellen. Die Radarvorrichtung kann durch Einsatz von Surface-mounted Device (SMD)-Prozessen kombiniert mit Direktspritzgießverfahren (direct injection molding, DIM) kostengünstig hergestellt werden.

Indem das Radarsignal direkt in die Hohlleiterantenne eingekoppelt wird, kann das Leiterplattenmaterial kostenoptimiert werden, ohne dass Millimeterwellenanforderungen und -einschränkungen bestehen.

Gemäß einer weiteren Ausführungsform der Radarvorrichtung ist die Wellenleiterkoppeleinrichtung dazu ausgebildet, das von dem Signalerzeugungsschaltkreis generierte Radarsignal in Wellenleiterkanäle der Wellenleiterantenneneinrichtung direkt einzukoppeln. Die Wellenleiterantenneneinrichtung ist in einem an die Wellenleiterkanäle anschließenden Verbindungsbereich direkt auf die Wellenleiterkoppeleinrichtung aufgespritzt. Insbesondere ist in diesem Verbindungsbereich kein Luftspalt ausgebildet. Bevorzugt ist der Kunststoff auf die Leiterplatte, den Signalerzeugungsschaltkreis bzw. die Wellenleiterkoppeleinrichtung direkt aufgespritzt. Lediglich Einkoppelbereiche (Speisekanäle) zum Einkoppeln der Radarstrahlen in die Wellenleiterantenneneinrichtung sind ausgespart. Das Fehlen eines Luftspalts ermöglicht es, auf sonst notwendige Toleranzausgleichsbereiche zu verzichten und auch Hochfrequenz-Verkopplungen zu benachbarten Einkoppelbereichen zu vermeiden.

Gemäß einer weiteren Ausführungsform der Radarvorrichtung ist die Wellenleiterantenneneinrichtung direkt auf den Signalerzeugungsschaltkreis aufgespritzt. Dadurch kann auf eine zusätzliche spezielle Ummoldung verzichtet werden, was die Erstellung vereinfacht und die Kosten reduziert.

Die Wellenleiterkoppeleinrichtung weist mindestens eine metallisierte Hochfrequenz-Struktur auf,
um das von dem Signalerzeugungsschaltkreis generierte Radarsignal in die Wellenleiterantenneneinrichtung einzukoppeln. Das Radarsignal wird über die metallisierte Hochfrequenz-Struktur direkt eingekoppelt.

Gemäß einer nicht beanspruchten Ausführungsform der Radarvorrichtung kontaktieren metallisierte Seitenwände eines Wellenleiterkanals der Wellenleiterantenneneinrichtung die metallisierte Hochfrequenz-Struktur. Der gesamte Einkoppelbereich ist somit metallisiert.

Erfindungsgemäß kontaktieren metallisierte Seitenwände eines Wellenleiterkanals der Wellenleiterantenneneinrichtung eine zwischen der Wellenleiterantenneneinrichtung und der Wellenleiterkoppeleinrichtung angeordnete Lötmaske. Die Lötmaske trennt die metallisierten Seitenwände des Wellenleiterkanals von der Wellenleiterkoppeleinrichtung.

Gemäß einer weiteren Ausführungsform der Radarvorrichtung ist die metallisierte Hochfrequenz-Struktur von der Lötmaske beabstandet.

Gemäß einer nicht beanspruchten Ausführungsform der Radarvorrichtung sind metallisierte Seitenwände eines Wellenleiterkanals der Wellenleiterantenneneinrichtung durch einen Spritzgusskunststoffabschnitt von der Wellenleiterkoppeleinrichtung beabstandet.

Gemäß einer weiteren Ausführungsform der Radarvorrichtung weisen die metallisierten Seitenwände am Übergang zur Wellenleiterkoppeleinrichtung einen parallel zur metallisierten Hochfrequenz-Struktur verlaufenden Abschnitt auf. Durch verschiedene Ausgestaltungen der metallisierten Seitenwände kann die Einkopplung beeinflusst werden.

Gemäß einer bevorzugten Ausführungsform der Radarvorrichtung weist die Wellenleiterkoppeleinrichtung einen Interposer auf, welcher dazu ausgebildet ist, das von dem Signalerzeugungsschaltkreis generierte Radarsignal zu der Wellenleiterantenneneinrichtung zu leiten.

Gemäß einer weiteren Ausführungsform umfasst die Radarvorrichtung mindestens einen Kühlkörper, welcher mit dem Signalerzeugungsschaltkreis und/oder der Leiterplatte zumindest indirekt verbunden ist, um Wärme abzuleiten. Dadurch kann ein Überhitzen der Radarvorrichtung vermieden werden.

Gemäß einer weiteren Ausführungsform der Radarvorrichtung ist der Signalerzeugungsschaltkreis ein System-on-a-Chip-Schaltkreis oder ein Monolithic-Microwave-Integrated-Circuit, MMIC.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

### Kurze Beschreibung der Zeichnungen

Es zeigen:
- Figur 1: eine schematische Querschnittsansicht einer Radarvorrichtung gemäß einer nicht beanspruchten ersten Ausführungsform der Erfindung;
- Figur 2: eine schematische Querschnittsansicht einer Radarvorrichtung gemäß einer nicht beanspruchten zweiten Ausführungsform der Erfindung;
- Figur 3: eine schematische Querschnittsansicht einer Radarvorrichtung gemäß einer nicht beanspruchten dritten Ausführungsform der Erfindung;
- Figur 4: eine schematische Querschnittsansicht einer Radarvorrichtung gemäß einer nicht beanspruchten vierten Ausführungsform der Erfindung;
- Figur 5: eine schematische Draufsicht und Querschnittsansicht einer Radarvorrichtung gemäß einer nicht beanspruchten fünften Ausführungsform der Erfindung;
- Figur 6: eine schematische Querschnittsansicht einer Radarvorrichtung gemäß einer nicht beanspruchten sechsten Ausführungsform der Erfindung;
- Figur 7: eine schematische Querschnittsansicht einer Radarvorrichtung gemäß einer nicht beanspruchten siebten Ausführungsform der Erfindung;

Figur 8 eine schematische Querschnittsansicht einer Radarvorrichtung gemäß einer nicht beanspruchten achten Ausführungsform der Erfindung;
Figur 9 eine schematische Querschnittsansicht einer Radarvorrichtung gemäß einer neunten Ausführungsform der Erfindung;
Figur 10 eine schematische Querschnittsansicht einer Radarvorrichtung gemäß einer zehnten Ausführungsform der Erfindung;
Figur 11 eine schematische Querschnittsansicht einer Radarvorrichtung gemäß einer nicht beanspruchten elften Ausführungsform der Erfindung;
Figur 12 eine schematische Querschnittsansicht einer Radarvorrichtung gemäß einer nicht beanspruchten zwölften Ausführungsform der Erfindung; und
Figur 13 ein Flussdiagramm eines Verfahrens zum Herstellen einer Radarvorrichtung.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

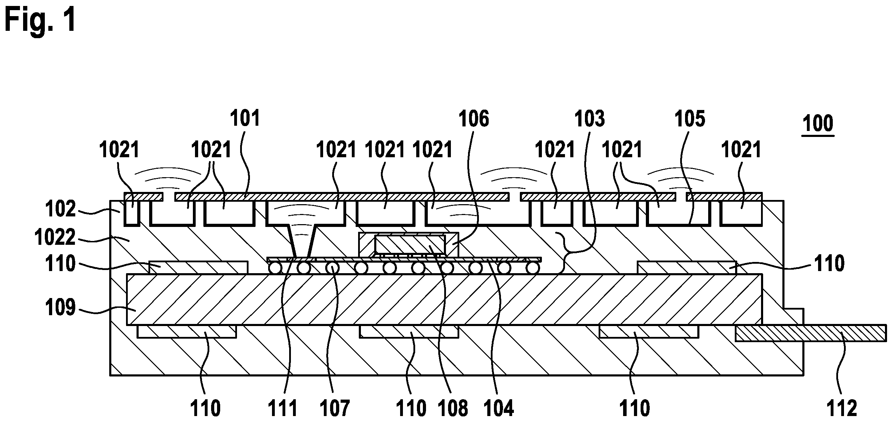

Figur 1 zeigt eine schematische Querschnittsansicht einer Radarvorrichtung 100. Die Radarvorrichtung 100 umfasst eine Leiterplatte 109 (gedruckte Leiterplatte, englisch: printed circuit board, PCB) mit Surface-mounted Devices (SMD) 110 und Steckerkontakten 112.

Mit der Leiterplatte 109 ist ein Signalerzeugungsschaltkreis 108 gekoppelt, wobei dieser in eine Wellenleiterkoppeleinrichtung 103 integriert ist, welche auch als Wellenleiter-Launcher bezeichnet werden kann. Diese Wellenleiterkoppeleinrichtung 103 ist in das Radarchip-Paket integriert, so dass kein Millimeterwellensignal auf der Leiterplatte 109 übertragen wird.

Die Wellenleiterkoppeleinrichtung 103 weist eine Moldmasse 106 auf, welche den Signalerzeugungsschaltkreis 108 auf einer von der Leiterplatte 109 weg zeigenden Seite umgibt. Gemäß weiteren Ausführungsformen kann die Moldmasse 106 fehlen.

Die Wellenleiterkoppeleinrichtung 103 weist weiter einen Interposer 104 auf. Der Interposer 104 ist in den äußeren Bereichen nicht von der Moldmasse 106 umgeben, um eine verlustarme Einkopplung von der Wellenleiterkoppeleinrichtung 103 in eine Wellenleiterantenneneinrichtung 102 zu ermöglichen.

Der Signalerzeugungsschaltkreis 108 ist auf dem Interposer 104 angeordnet und der Interposer 104 ist über Solder-Bälle oder Pads 107 mit der Leiterplatte 109 verbunden, sodass ein Ball-Grid-Array (BGA)- oder Land-Grid-Array (LGA)-artiges Gehäuse gebildet wird. Der Signalerzeugungsschaltkreis 108 ist ein Monolithic-Microwave-Integrated-Circuit, MMIC. Gemäß weiteren Ausführungsformen kann der Signalerzeugungsschaltkreis 108 auch ein System-on-a-Chip-Schaltkreis sein. Der Signalerzeugungsschaltkreis 108 ist dazu ausgebildet, ein Radarsignal (HF-Signal) zu generieren und zu empfangen.

Die Wellenleiterantenneneinrichtung 102 ist auf der Leiterplatte 109 angeordnet und umgibt die Wellenleiterkoppeleinrichtung 103 und den darin integrierten Signalerzeugungsschaltkreis 108. Die Wellenleiterantenneneinrichtung 102 wird gebildet, indem die Leiterplatte 109 mit der Wellenleiterkoppeleinrichtung 103 und dem Signalerzeugungsschaltkreis 108 mit einem Kunststoff 1022 umspritzt wird, etwa einem Duroplast oder Thermoplast.

Die Wellenleiterantenneneinrichtung 102 umfasst Wellenleiterkanäle 1021 mit metallisierten Seitenwänden 105. Auf den Wellenleiterkanälen 1021 ist ein Lochblech 101 angeordnet. Die Wellenleiterkoppeleinrichtung 103 ist dazu ausgebildet ist, das von dem Signalerzeugungsschaltkreis 108 generierte Radarsignal in die Wellenleiterantenneneinrichtung 102 einzukoppeln. Das Radarsignal wird durch Öffnungen des Lochblechs 101 ausgesendet.

Der Übergang zur Wellenleiterantenneneinrichtung 102 wird vorteilhafterweise auf einem nicht von Moldmasse 106 umgebenen Teil des Interposers 104 realisiert, was die HF-Verluste reduziert und eine hohe Bandbreite sicherstellt. Die Einkopplung erfolgt über eine metallisierte Hochfrequenz-Struktur 111.

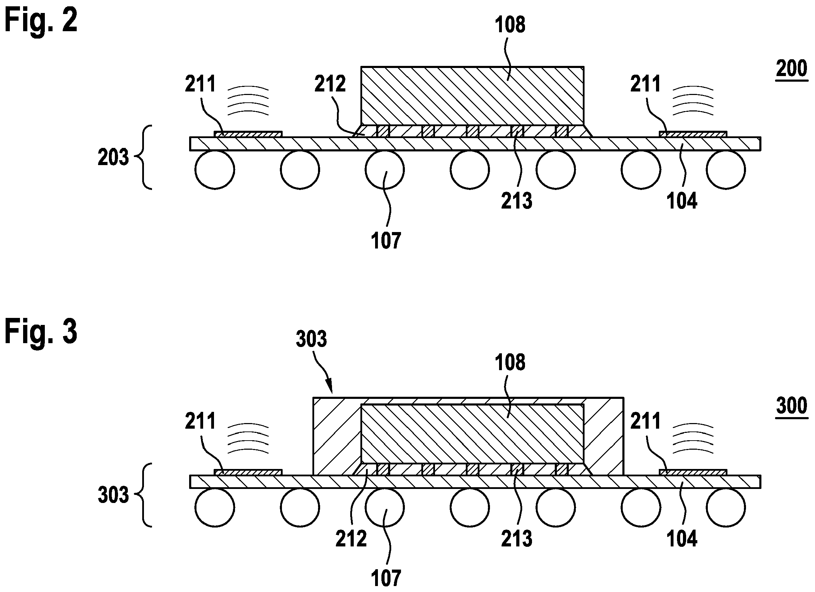

Figur 2 zeigt eine schematische Querschnittsansicht eines Details einer Radarvorrichtung 200. Der Signalerzeugungsschaltkreis 108 wird hierbei mittels Flip-Chip-Technik auf den Interposer 104 aufgebracht und ist mittels Kontaktierungen 213 mit dem Interposer 104 verbunden. Der Signalerzeugungsschaltkreis 108 wird nicht von einer Moldmasse umgeben. Es handelt sich somit um einen Bare-Die-Aufbau. In den seitlichen Bereichen der Leiterplatte sind Hochfrequenz (HF)-Strukturen 211 in den leitenden Schichten realisiert. Diese sind dazu ausgebildet, das von dem Signalerzeugungsschaltkreis 108 generierte Radarsignal in eine anschließende (nicht gezeigte) Wellenleiterantenneneinrichtung einzukoppeln. Zwischen dem Signalerzeugungsschaltkreis 108 und dem Interposer 104 ist ein kapillarer Underfill (CUF) oder Mold-Underfill (MUF) 212 ausgebildet. Bei der Radarvorrichtung 200 wird die Wellenleiterkoppeleinrichtung 203 durch den Interposer 104 mit CUF bzw. MUF 212, Kontaktierungen 213 und HF-Strukturen 211 gebildet. Die Leiterplatte 109 ist nicht gezeigt. Die gezeigte Komponente der Radarvorrichtung 200 kann als Launcher-on-Package bezeichnet werden. Die nicht gezeigte Wellenleiterantenneneinrichtung wird mittels Spritzgussverfahren aufgebracht. In Figur 2 und auch in den nachfolgenden Figuren 3 bis 11 können nicht abgebildete Komponenten wie in Figur 1 vorgesehen sein.

Figur 3 zeigt eine schematische Querschnittsansicht eines Launcher-on-Package einer Radarvorrichtung 300. Der Aufbau entspricht im Wesentlichen dem in Figur 2 illustrierten Aufbau, insbesondere bezüglich der Wellenleiterkoppeleinrichtung 303. Zusätzlich wird der Signalerzeugungsschaltkreis 108 teilweise mit einer Moldmasse 303 umgeben. Die seitlichen Bereiche des Interposers 104 werden dabei jedoch nicht mit Moldmasse 303 umgehen.

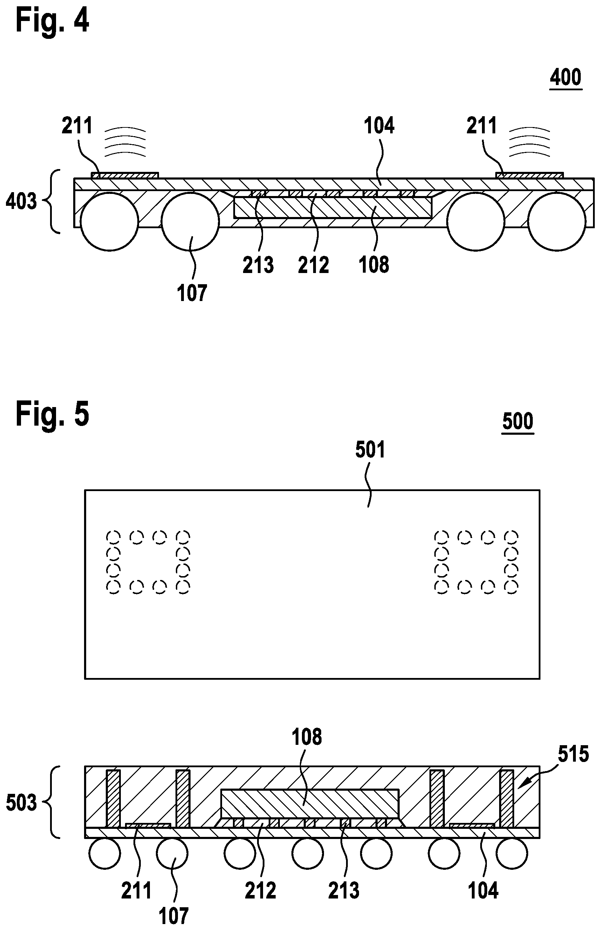

Figur 4 zeigt eine schematische Querschnittsansicht eines Launcher-on-Package einer Radarvorrichtung 400. Dabei ist der Signalerzeugungsschaltkreis 108 auf einer Unterseite des Interposers 104 der Wellenleiterkoppeleinrichtung 403 angeordnet und mit Moldmasse 403 umgeben. Die HF-Strukturen 211 sind auf der Oberseite des Interposers 104 angeordnet und die HF-Wellensignale werden nach oben abgestrahlt und in die Wellenleiterantenneneinrichtung (nicht gezeigt) eingekoppelt.

Figur 5 zeigt eine schematische Draufsicht (oben) und Querschnittsansicht (unten) eines Launcher-on-Package einer Radarvorrichtung 500. Dabei ist die Moldmasse 501 auch in den äußeren Bereichen auf dem Interposer 104 ausgebildet, wobei die HF-Signale mittels Durchkontaktierungen (Vias) 515 von der Wellenleiterkoppeleinrichtung 503 in die (nicht gezeigte) Wellenleiterantenneneinrichtung eingekoppelt werden. Die Durchkontaktierungen 515 verlaufen durch die Moldmasse 501 und werden mittels Through-Mold-Via-Technologie hergestellt.

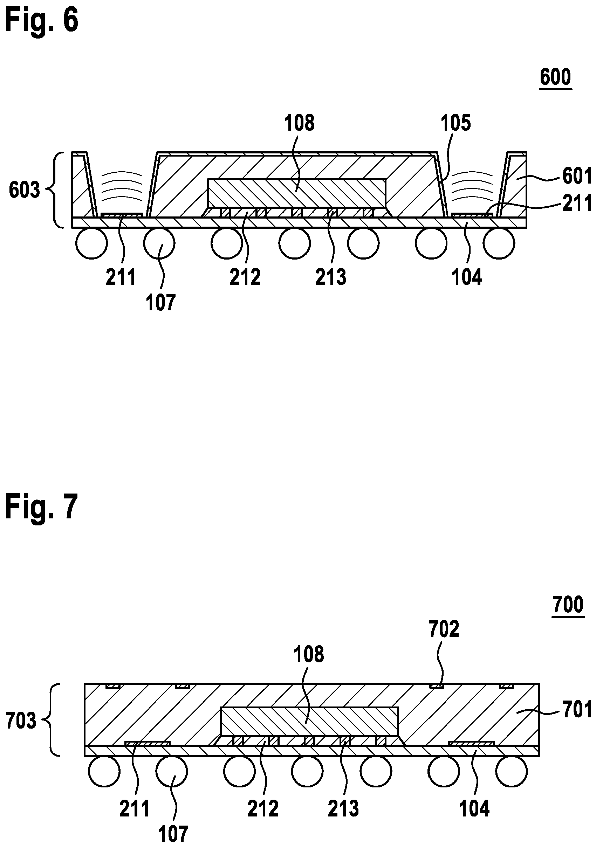

Figur 6 zeigt eine schematische Querschnittsansicht eines Launcher-on-Package einer Radarvorrichtung 600. Dabei wird eine von einer Moldmasse 601 umgebene Wellenleiterkoppeleinrichtung 603 bereitgestellt, wobei die HF-Strukturen 211 freiliegen oder zumindest teilweise von einer dünnen Moldmassenschicht bedeckt sind.

Figur 7 zeigt eine schematische Querschnittsansicht eines Launcher-on-Package einer Radarvorrichtung 700. Diese unterscheidet sich von der in Figur 6 gezeigten Radarvorrichtung 600 dadurch, dass die HF-Strukturen 211 der Wellenleiterkoppeleinrichtung 703 in einer Moldmasse 701 nicht freiliegen. Oberhalb der HF-Strukturen 211 sind Strahlformungselemente 702 ausgebildet.

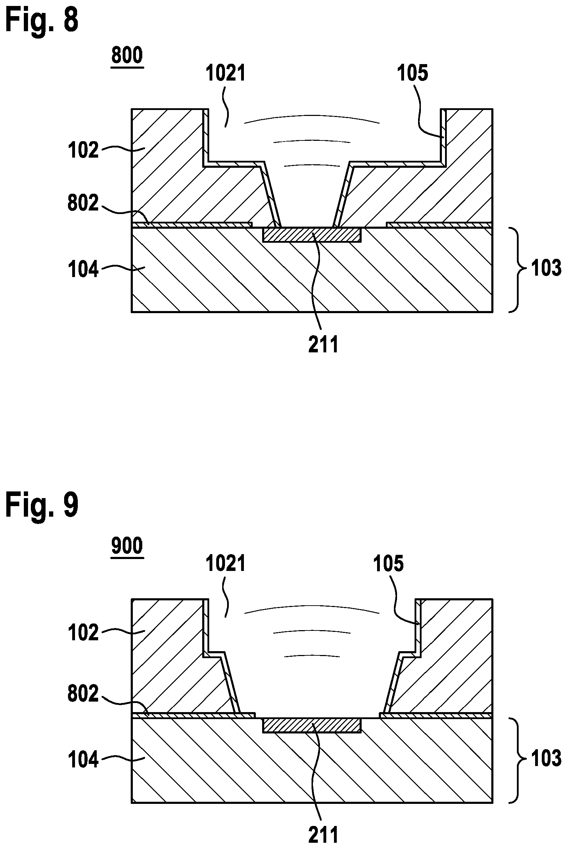

Figur 8 zeigt eine schematische Querschnittsansicht eines Details einer Radarvorrichtung 800, und zwar einer Einkoppelstruktur. Diese umfasst einen Wellenleiterkanal 1021 mit metallisierten Seitenwänden 105, welche die metallisierte Hochfrequenz-Struktur 211 kontaktieren. Zwischen der Wellenleiterantenneneinrichtung 102 und der Wellenleiterkoppeleinrichtung 103 befindet sich außerhalb der Einkoppelstruktur eine Lötmaske 802.

Figur 9 zeigt eine schematische Querschnittsansicht einer Einkoppelstruktur einer Radarvorrichtung 900. Dabei kontaktieren metallisierte Seitenwände 105 eines Wellenleiterkanals 1021 der Wellenleiterantenneneinrichtung 102 eine zwischen der Wellenleiterantenneneinrichtung 102 und der Wellenleiterkoppeleinrichtung 103 angeordnete Lötmaske 802. Die metallisierte Hochfrequenz-Struktur 211 ist dabei von der Lötmaske 802 beabstandet.

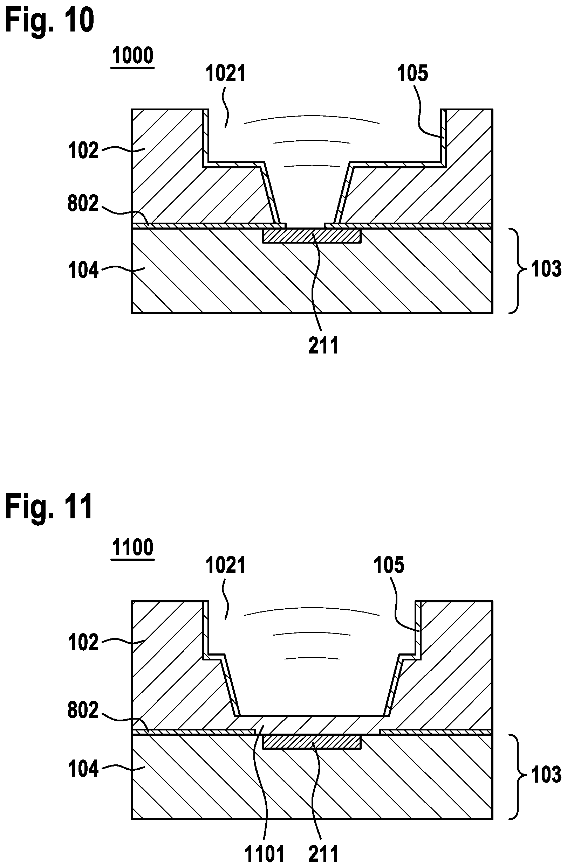

Figur 10 zeigt eine schematische Querschnittsansicht einer Einkoppelstruktur einer Radarvorrichtung 1000. Im Unterschied zur in Figur 9 gezeigten Einkoppelstruktur überlappt die metallisierte Hochfrequenz-Struktur 211 mit der Lötmaske 802.

Figur 11 zeigt eine schematische Querschnittsansicht einer Einkoppelstruktur einer Radarvorrichtung 1100. Die metallisierten Seitenwände 105 des Wellenleiterkanals 1021 der Wellenleiterantenneneinrichtung 102 sind dabei durch einen Spritzgusskunststoffabschnitt 1101 von der Wellenleiterkoppeleinrichtung 103 beabstandet. Der Abstand kann beispielsweise zwischen 20µm und 100µm bis 500µm liegen. Der Spritzgusskunststoffabschnitt 1101 kann aus Duroplast- oder ThermoplastMaterial bestehen, etwa aus dem gleichen Material wie zum Aufbau des restlichen Hohlleiters 102. Es kann jedoch auch ein weiteres dielektrisches Material vorgesehen sein.

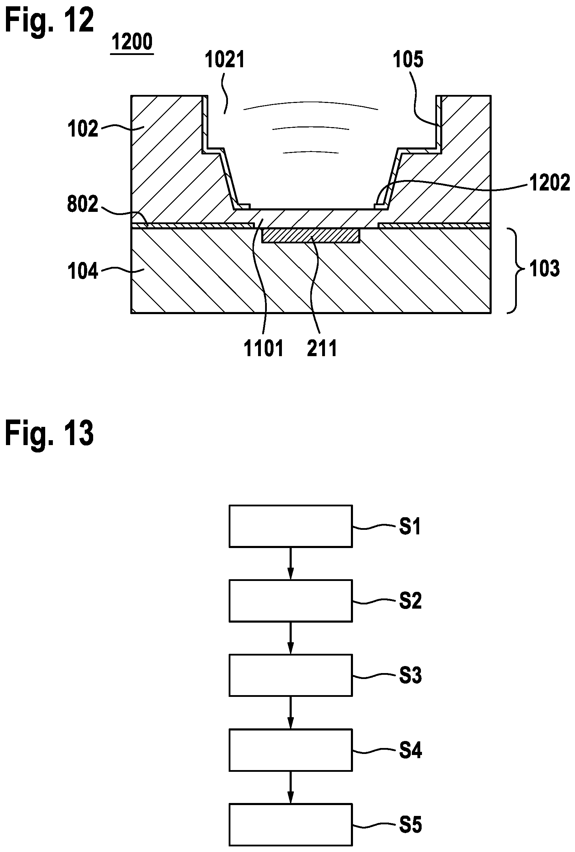

Figur 12 zeigt eine schematische Querschnittsansicht einer Einkoppelstruktur einer Radarvorrichtung 1200. Im Unterschied zur in Figur 11 gezeigten Einkoppelstruktur weisen die metallisierten Seitenwände 105 am Übergang zur Wellenleiterkoppeleinrichtung 103 einen parallel zur metallisierten Hochfrequenz-Struktur 211 verlaufenden Abschnitt 1202 auf.

Figur 13 zeigt ein Flussdiagramm eines Verfahrens zum Herstellen einer Radarvorrichtung.

In einem ersten Verfahrensschritt S1 wird eine Leiterplatte 109 bereitgestellt, wobei ein Signalerzeugungsschaltkreis 108 zumindest mittelbar auf der Leiterplatte 109 angeordnet ist. Der Signalerzeugungsschaltkreis 108 ist mit der Leiterplatte 109 elektrisch gekoppelt und dazu ausgebildet, ein Radarsignal zu generieren.

In einem zweiten Verfahrensschritt S2 wird die Leiterplatte 109 mit dem Signalerzeugungsschaltkreis 108 in einer mit Wellenleiterkanälen strukturierten Spritzgussform angeordnet und zumindest teilweise mit Kunststoff umspritzt, etwa Duroplast oder Thermoplast. Ein Übergangsbereich zu den Wellenleiterkanälen kann dabei freigelassen werden.

In einem Schritt S3 wird die Spritzgussform entfernt. In einem Schritt S4 werden die Wellenleiterkanäle metallisiert, sodass eine Wellenleiterantenneneinrichtung 102 gebildet wird. Dabei kann so verfahren werden, dass der metallische Übergang im Einkoppelbereich nicht mitmetallisiert wird, z.B. mit Masken. Alternativ kann die Metallabscheidung auch auf metallischen Strukturen im Einkoppelbereich erfolgen. Das Metall wird dann wieder entfernt.

Die Metallisierung kann physikalisch oder chemisch oder galvanisch erfolgen. Die Entfernung vom Metall kann mittels Laser erfolgen oder mit nasschemischen oder trockenen Ätzprozessen.

In einem Schritt S5 werden Einkoppelelemente einer Wellenleiterkoppeleinrichtung 103 freigestellt, wobei die Wellenleiterkoppeleinrichtung 103 dazu ausgebildet ist, das von dem Signalerzeugungsschaltkreis 108 generierte Radarsignal über die Einkoppelelemente in die Wellenleiterantenneneinrichtung 102 einzukoppeln.

## Patentansprüche

1. Radarvorrichtung (900; 1000), mit:
einer Leiterplatte (109);
einem Signalerzeugungsschaltkreis (108), welcher zumindest mittelbar auf der Leiterplatte (109) angeordnet ist, mit der Leiterplatte (109) elektrisch gekoppelt ist und dazu ausgebildet ist, ein Radarsignal zu generieren;
einer Wellenleiterantenneneinrichtung (102), welche zumindest mittelbar auf der Leiterplatte (109) angeordnet ist und zumindest teilweise auf Spritzgusskunststoffbasis ausgebildet ist;
einer Wellenleiterkoppeleinrichtung (103), wobei der Signalerzeugungsschaltkreis (108) auf oder in der Wellenleiterkoppeleinrichtung (103) angeordnet ist, und wobei die Wellenleiterkoppeleinrichtung (103) dazu ausgebildet ist, das von dem Signalerzeugungsschaltkreis (108) generierte Radarsignal in die Wellenleiterantenneneinrichtung (102) einzukoppeln; und
einer Lötmaske (802), welche zwischen der Wellenleiterantenneneinrichtung (102) und der Wellenleiterkoppeleinrichtung (103) angeordnet ist;
wobei die Wellenleiterkoppeleinrichtung (103) mindestens eine metallisierte Hochfrequenz-Struktur (111; 211) aufweist, um das von dem Signalerzeugungsschaltkreis (108) generierte Radarsignal in die Wellenleiterantenneneinrichtung (102) einzukoppeln; und
wobei metallisierte Seitenwände (105) eines Wellenleiterkanals (1021) der Wellenleiterantenneneinrichtung (102) die Lötmaske (802) kontaktieren.

2. Radarvorrichtung (900; 1000) nach Anspruch 1, wobei die Wellenleiterkoppeleinrichtung (103) dazu ausgebildet ist, das von dem Signalerzeugungsschaltkreis (108) generierte Radarsignal in Wellenleiterkanäle (1021) der Wellenleiterantenneneinrichtung (102) direkt einzukoppeln, und wobei die Wellenleiterantenneneinrichtung (102) in einem an die Wellenleiterkanäle (1021) anschließenden Verbindungsbereich direkt auf die Wellenleiterkoppeleinrichtung (103) aufgespritzt ist.

3. Radarvorrichtung (900; 1000) nach Anspruch 1 oder 2, wobei die Wellenleiterantenneneinrichtung (102) direkt auf den Signalerzeugungsschaltkreis (108) aufgespritzt ist.

4. Radarvorrichtung (900) nach einem der vorangehenden Ansprüche, wobei die metallisierte Hochfrequenz-Struktur (111; 211) von der Lötmaske (802) beabstandet ist.

5. Radarvorrichtung (900; 1000) nach einem der vorangehenden Ansprüche, wobei die metallisierten Seitenwände (105) am Übergang zur Wellenleiterkoppeleinrichtung (103) einen parallel zur metallisierten Hochfrequenz-Struktur (111; 211) verlaufenden Abschnitt (1202) aufweisen.

6. Verfahren zum Herstellen einer Radarvorrichtung (900; 1000), mit den Schritten:
Bereitstellen (S1) einer Leiterplatte (109), wobei ein Signalerzeugungsschaltkreis (108) zumindest mittelbar auf der Leiterplatte (109) angeordnet ist, wobei der Signalerzeugungsschaltkreis (108) mit der Leiterplatte (109) elektrisch gekoppelt ist und dazu ausgebildet ist, ein Radarsignal zu generieren;
zumindest teilweises Umspritzen (S2) der Leiterplatte (109) mit dem Signalerzeugungsschaltkreis (108) mit Kunststoff in einer mit Wellenleiterkanälen (1021) strukturierten Spritzgussform;
Entfernen (S3) der Spritzgussform;
Metallisieren (S4) der Wellenleiterkanäle (1021) zum Ausbilden einer Wellenleiterantenneneinrichtung (102); und
Freistellen (S5) von Einkoppelelementen einer Wellenleiterkoppeleinrichtung (103), wobei die Wellenleiterkoppeleinrichtung (103) dazu ausgebildet ist, das von dem Signalerzeugungsschaltkreis (108) generierte Radarsignal über die Einkoppelelemente in die Wellenleiterantenneneinrichtung (102) einzukoppeln;
wobei eine Lötmaske (802) zwischen der Wellenleiterantenneneinrichtung (102) und der Wellenleiterkoppeleinrichtung (103) angeordnet wird;
wobei die Wellenleiterkoppeleinrichtung (103) mindestens eine metallisierte Hochfrequenz-Struktur (111; 211) aufweist, um das von dem Signalerzeugungsschaltkreis (108) generierte Radarsignal in die Wellenleiterantenneneinrichtung (102) einzukoppeln; und
wobei metallisierte Seitenwände (105) eines Wellenleiterkanals (1021) der Wellenleiterantenneneinrichtung (102) die Lötmaske (802) kontaktieren.

## Claims

1. Radar apparatus (900; 1000), having:
a printed circuit board (109);
a signal generation circuit (108) that is arranged at least indirectly on the printed circuit board (109), is electrically coupled to the printed circuit board (109) and is designed to generate a radar signal;
a waveguide antenna device (102) that is arranged at least indirectly on the printed circuit board (109) and is formed at least partially based on injection moulding;
a waveguide coupling device (103), wherein the signal generation circuit (108) is arranged on or in the waveguide coupling device (103), and
wherein the waveguide coupling device (103) is designed to couple the radar signal generated by the signal generation circuit (108) into the waveguide antenna device (102); and
a solder mask (802) that is arranged between the waveguide antenna device (102) and the waveguide coupling device (103);
wherein the waveguide coupling device (103) has at least one metallized radiofrequency structure (111; 211) in order to couple the radar signal generated by the signal generation circuit (108) into the waveguide antenna device (102); and
wherein metallized side walls (105) of a waveguide channel (1021) of the waveguide antenna device (102) are in contact with the solder mask (802).

2. Radar apparatus (900; 1000) according to Claim 1, wherein the waveguide coupling device (103) is designed to couple the radar signal generated by the signal generation circuit (108) directly into waveguide channels (1021) of the waveguide antenna device (102), and wherein the waveguide antenna device (102) is sprayed directly onto the waveguide coupling device (103) in a connecting region adjoining the waveguide channels (1021).

3. Radar apparatus (900; 1000) according to Claim 1 or 2, wherein the waveguide antenna device (102) is sprayed directly onto the signal generation circuit (108).

4. Radar apparatus (900) according to one of the preceding claims, wherein the metallized radiofrequency structure (111; 211) is spaced apart from the solder mask (802).

5. Radar apparatus (900; 1000) according to one of the preceding claims,
wherein the metallized side walls (105) have a section (1202) running parallel to the metallized radiofrequency structure (111; 211) at the transition to the waveguide coupling device (103).

6. Method for producing a radar apparatus (900; 1000), comprising the following steps:
providing (S1) a printed circuit board (109), wherein a signal generation circuit (108) is arranged at least indirectly on the printed circuit board (109), wherein the signal generation circuit (108) is electrically coupled to the printed circuit board (109) and is designed to generate a radar signal;
at least partially encapsulating (S2) the printed circuit board (109) together with the signal generation circuit (108) with plastic in an injection mould that is structured with waveguide channels (1021);
removing (S3) the injection mould;
metallizing (S4) the waveguide channels (1021) so as to form a waveguide antenna device (102); and
releasing (S5) input-coupling elements of a waveguide coupling device (103), wherein the waveguide coupling device (103) is designed to couple the radar signal generated by the signal generation circuit (108) into the waveguide antenna device (102) via the input-coupling elements;
wherein a solder mask (802) is arranged between the waveguide antenna device (102) and the waveguide coupling device (103);
wherein the waveguide coupling device (103) has at least one metallized radiofrequency structure (111; 211) in order to couple the radar signal generated by the signal generation circuit (108) into the waveguide antenna device (102); and
wherein metallized side walls (105) of a waveguide channel (1021) of the waveguide antenna device (102) are in contact with the solder mask (802).

## Revendications

1. Dispositif radar (900 ; 1000), avec :
une carte de circuits imprimés (109) ;
un circuit générateur de signaux (108), qui est disposé au moins indirectement sur la carte de circuits imprimés (109), est couplé électriquement à la carte de circuits imprimés (109) et est formé pour générer un signal radar ;
un système d'antenne à guide d'ondes (102), qui est disposé au moins indirectement sur la carte de circuits imprimés (109) et est formé au moins en partie sur une base de matière plastique moulée par injection ;
un système de couplage à guide d'ondes (103), le circuit de génération de signaux (108) étant disposé sur ou dans le système de couplage à guide d'ondes (103), et
le système de couplage à guide d'onde (103) étant formé pour injecter le signal radar généré par le circuit générateur de signaux (108) dans le système d'antenne à guide d'onde (102) ; et
un masque de soudure (802), qui est disposé entre le système d'antenne à guide d'ondes (102) et le système de couplage à guide d'ondes (103) ;
le système de couplage à guide d'ondes (103) comportant au moins une structure métallisée haute fréquence (111 ; 211) pour injecter le signal radar généré par le circuit générateur de signaux (108) dans le système d'antenne à guide d'ondes (102) ; et
des parois latérales métallisées (105) d'un canal de guide d'ondes (1021) du système d'antenne à guide d'ondes (102) entrant en contact avec le masque de soudure (802).

2. Dispositif radar (900 ; 1000) selon la revendication 1, le système de couplage à guide d'ondes (103) étant formé pour injecter directement le signal radar généré par le circuit générateur de signaux (108) dans des canaux de guide d'ondes (1021) du système d'antenne à guide d'ondes (102), et le système d'antenne à guide d'ondes (102) étant pulvérisé directement sur le système de couplage à guide d'ondes (103) dans une zone de liaison située dans le prolongement des canaux de guide d'ondes (1021).

3. Dispositif radar (900 ; 1000) selon la revendication 1 ou 2, le système d'antenne à guide d'onde (102) étant pulvérisé directement sur le circuit générateur de signaux (108).

4. Dispositif radar (900) selon l'une des revendications précédentes, la structure métallisée haute fréquence (111 ; 211) étant espacée du masque de soudure (802).

5. Dispositif radar (900 ; 1000) selon l'une des revendications précédentes, les parois latérales métallisées (105) comportant sur la transition vers le système de couplage à guide d'ondes (103) une section (1202) s'étendant parallèlement à la structure métallisée haute fréquence (111 ; 211).

6. Procédé de fabrication d'un dispositif radar (900 ; 1000), avec les étapes :
fourniture (S1) d'une carte de circuits imprimés (109), un circuit générateur de signaux (108) étant disposé au moins indirectement sur la carte de circuits imprimés (109), le circuit générateur de signaux (108) étant électriquement couplé à la carte de circuits imprimés (109) et étant formé pour générer un signal radar ;
surmoulage (S2) au moins partiel de la carte de circuits imprimés (109) avec le circuit générateur de signaux (108) de matière plastique dans un moule de moulage par injection structuré avec des canaux de guide d'onde (1021) ;
retrait (S3) du moule de moulage par injection ;
métallisation (S4) des canaux de guide d'ondes (1021) pour former un système d'antenne à guide d'ondes (102) ; et
libération (S5) d'éléments d'injection d'un système de couplage à guide d'onde (103), le système de couplage à guide d'onde (103) étant formé pour injecter le signal radar généré par le circuit générateur de signaux (108) par les éléments d'injection dans le système d'antenne à guide d'onde (102) ;
un masque de soudure (802) étant disposé entre le système d'antenne à guide d'ondes (102) et le système de couplage à guide d'ondes (103) ;
le système de couplage à guide d'ondes (103) comportant au moins une structure métallisée haute fréquence (111 ; 211) pour injecter le signal radar généré par le circuit générateur de signaux (108) dans le système d'antenne à guide d'ondes (102) ; et
des parois latérales métallisées (105) d'un canal de guide d'ondes (1021) du système d'antenne à guide d'ondes (102) entrant en contact avec le masque de soudure (802).
